# EUROPEAN PATENT APPLICATION

(11) **EP 2 081 275 A1**
(43) Date of publication of application: **22.07.2009**
(21) Application number: 09150396.1
(22) Date of filing: 12.01.2009
(51) Int. Cl.: H02J 7/34, H02M 3/158

(54) **Charging device**

(30) Priority: 15.01.2008 JP 2008005306
(71) Applicant: Nisshinbo Industries, Inc., Chuo-ku, Tokyo 103-8650 (JP)
(72) Inventor: Masho, Tetu, Mitaka-shi, Tokyo 181-8510 (JP)
(74) Representative: Vossius & Partner

(57) **Abstract**

Provided is a charging device for supplying electric power accumulated in a secondary battery (2) to an electric double layer capacitor (3) to charge the electric double layer capacitor (3) and for discharging at least some of the electric power accumulated in the electric double layer capacitor (3) to the secondary battery (2) in a period during which the electric double layer capacitor (3) does not supply the electric power to a load (4).

## Description

The present invention relates to a charging device for charging an electric double layer capacitor.

The electric double layer capacitor is a capacitor device which can be charged and discharged repeatedly, and has a feature that quick charge and discharge are possible, and other features. For instance, the electric double layer capacitor is used for an automobile, a portable medical device, or the like. Specifically in an automobile, for example, the electric double layer capacitor is used for an application in which it is charged by a secondary battery (rechargeable battery) and supplies a large electrical power for a limited period to a load such as a starter motor for starting an engine, an electric braking system, or an electric power steering system (see, for example, JP-2005-80466 A).

The electric double layer capacitor has the characteristic that its lifetime decreases exponentially as a voltage applied between its terminals increases. Therefore, if the electric double layer capacitor is used in the state where a high voltage is always applied thereto, it will be deteriorated in a short time. Therefore, for an application in which the supply of power to the load is required only for a limited period, as described above, the electric double layer capacitor is forcedly discharged in some cases in the period during which the power is not supplied to the load, so that its voltage is decreased for the purpose of realizing a long lifetime. However, such a discharge causes wasteful consumption of power accumulated in the electric double layer capacitor, resulting in an increase of energy loss.

The present invention has been made in view of the above-mentioned situation, and one of its objects is to provide a charging device that is capable of reducing energy loss while a long lifetime of the electric double layer capacitor can be realized.

To solve the above-mentioned problem, a charging device according to the present invention includes: a charge means for supplying electric power accumulated in a secondary battery to an electric double layer capacitor to charge the electric double layer capacitor; and a discharge means for discharging at least some of the electric power accumulated in the electric double layer capacitor to the secondary battery in a period during which the electric double layer capacitor does not supply the electric power to a load.

Further, in the above-mentioned charging device, the discharge means may discharge the electric double layer capacitor to the secondary battery until a voltage between terminals of the electric double layer capacitor decreases to a predetermined target voltage.

Further, in the above-mentioned charging device, each of the charge means and the discharge means may include one of a boost converter and a buck converter.

Alternatively, in the above-mentioned charging device, both of the charge means and the discharge means may be included in a single buck-boost converter.

In addition, another charging device according to the present invention includes: a charge circuit for supplying electric power accumulated in a secondary battery to an electric double layer capacitor to charge the electric double layer capacitor; and a discharge circuit for discharging at least some of the electric power accumulated in the electric double layer capacitor to the secondary battery in a period during which the electric double layer capacitor does not supply the electric power to a load.

Moreover, still another charging device according to the present invention includes a charge and discharge circuit for supplying electric power accumulated in a secondary battery to an electric double layer capacitor to charge the electric double layer capacitor and for discharging at least some of the electric power accumulated in the electric double layer capacitor to the secondary battery in a period during which the electric double layer capacitor does not supply the electric power to a load.

Hereinafter, an embodiment of the present invention is described with reference to the attached drawings.

In the accompanying drawings:
Fig. 1 is a diagram illustrating an example of a general structure of a charging device according to an embodiment of the present invention;
Fig. 2 is a circuit diagram illustrating an example of a specific circuit structure of the charging device according to the embodiment of the present invention;
Fig. 3 is a graph showing an example of a time variation of a voltage between terminals of an electric double layer capacitor;
Fig. 4 is a graph showing another example of a time variation of the voltage between the terminals of the electric double layer capacitor;
Fig. 5 is a circuit diagram illustrating another example of the circuit structure of the charging device according to the embodiment of the present invention;
Fig. 6 is a circuit diagram illustrating still another example of the circuit structure of the charging device according to the embodiment of the present invention; and
Fig. 7 is a circuit diagram illustrating still another example of the circuit structure of the charging device according to the embodiment of the present invention.

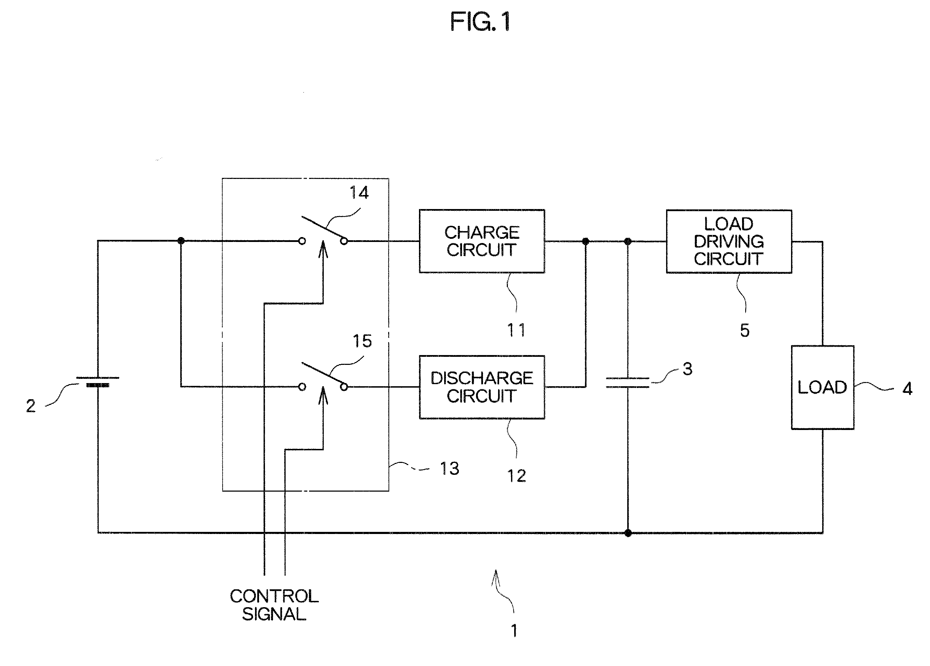

FIG. 1 is a schematic structural diagram for describing an operational principle of the charging device 1 according to an embodiment of the present invention. The charging device 1 according to this embodiment supplies electric power accumulated in the secondary battery (rechargeable battery) 2 to an electric double layer capacitor 3 to charge the electric double layer capacitor 3. Here, both the secondary battery 2 and the electric double layer capacitor 3 are capacitor devices which can be charged and discharged repeatedly. Note that the electric double layer capacitor 3 of this embodiment may be, for example, an electric double layer capacitor module in which a plurality of electric double layer capacitor cells are connected to each other. Further, in the following description, the voltage between terminals of the secondary battery 2 (i.e., power supply voltage of the secondary battery 2) is referred to as a voltage Vb, and the voltage between terminals of the electric double layer capacitor 3 is referred to as a voltage Vc.

In addition, the electric double layer capacitor 3 is connected to a load 4 such as an electromagnetic solenoid via a load driving circuit 5 so that electric power is supplied to the load 4 for driving the load 4. However, it is not necessary for the electric double layer capacitor 3 to continuously drive the load 4. Specifically, the on or off state of the load driving circuit 5 is switched at the timing determined by an external control signal or the like so that the electric double layer capacitor 3 supplies the electric power to the load 4 via the load driving circuit 5 only for a limited period. Note that the electric double layer capacitor 3 has a voltage characteristic that is different from that of the secondary battery 2 and the voltage Vc between terminals thereof varies in accordance with the accumulated electric power. Therefore, if it is necessary to supply electric power to the load 4, the electric double layer capacitor 3 is charged by the charging device 1 to the voltage (hereinafter, referred to as a drive voltage Vcd) that is required for the voltage Vc between terminals to drive the load 4.

The charging device 1 includes a charge circuit 11, a discharge circuit 12, and a control portion 13 as illustrated in FIG. 1. In addition, the control portion 13 includes switches 14 and 15 in the example illustrated in FIG. 1.

Both the charge circuit 11 and the discharge circuit 12 are disposed between the secondary battery 2 and the electric double layer capacitor 3, and are connected in parallel with each other. Further, the switch 14 is connected in series to the charge circuit 11. When the switch 14 is turned on, the secondary battery 2 and the electric double layer capacitor 3 are connected to each other via the charge circuit 11. In addition, the switch 15 is connected in series to the discharge circuit 12. When the switch 15 is turned on, the secondary battery 2 and the electric double layer capacitor 3 are connected to each other via the discharge circuit 12.

The charge circuit 11 includes, for example, a DC/DC converter or the like, and steps up or steps down an input voltage supplied from the secondary battery 2 (i.e., power supply voltage Vb of the secondary battery 2) depending on the situation, so that the resultant voltage is delivered to the electric double layer capacitor 3. Thus, the charge circuit 11 supplies the electric power accumulated in the secondary battery 2 to the electric double layer capacitor 3 to charge the electric double layer capacitor 3. Here, the charge circuit 11 may restrict the current flowing from the secondary battery 2 to the electric double layer capacitor 3 so as not to exceed a predetermined amount, in order to protect the charge circuit.

Further, if the charge circuit 11 always steps down the input voltage Vb from the secondary battery 2 to deliver the resultant voltage to the electric double layer capacitor 3, the charge circuit 11 may be made up of a resistor. If the resistor is used as the charge circuit 11, the current flowing in the electric double layer capacitor 3 side can be restricted while the input voltage Vb from the secondary battery 2 can be stepped down before being applied to the electric double layer capacitor 3. In addition, compared with the case where the DC/DC converter (buck (step down) converter) is used, a circuit scale can be reduced. On the other hand, if a DC/DC converter such as a switching regulator is used for the charge circuit 11, energy loss in the charging process can be reduced compared with the case where the resistor is used.

The discharge circuit 12 includes, for example, a DC/DC converter or the like, and receives the input voltage from the electric double layer capacitor 3 (i.e., voltage Vc between terminals of the electric double layer capacitor 3) and delivers the same to the secondary battery 2 for discharging the electric double layer capacitor 3. When the discharge circuit 12 operates, current flows from the electric double layer capacitor 3 to the secondary battery 2 oppositely to the case where the charge circuit 11 charges the electric double layer capacitor 3. At least some of the charge accumulated in the electric double layer capacitor 3 flows back to the secondary battery 2. This discharge decreases the voltage Vc between terminals of the electric double layer capacitor 3. Further, similarly to the charge circuit 11, the discharge circuit 12 may be made up of a resistor if the input voltage Vc from the electric double layer capacitor 3 is always stepped down before being applied to the secondary battery 2.

The control portion 13 controls operational timings of the charge circuit 11 and the discharge circuit 12. Specifically, the control portion 13 switches the on and off timing of the switches 14 and 15 in accordance with a control signal supplied from the outside, whereby operations of the charge circuit 11 and the discharge circuit 12 are controlled. Here, the control portion 13 turns on one of the switches 14 and 15 while turning off the other thereof for controlling the switches 14 and 15 so that they are not turned on simultaneously. In other words, the switch 15 is turned off while the switch 14 is turned on, and the switch 14 is turned off while the switch 15 is turned on.

Specifically, the control portion 13 turns the switch 14 on when the electric double layer capacitor 3 is charged. Thus, the charge circuit 11 is electrically connected to the secondary battery 2 and the electric double layer capacitor 3, whereby the electric power accumulated in the secondary battery 2 is supplied to the electric double layer capacitor 3 for charging the electric double layer capacitor 3. In addition, the control portion 13 sets the switch 15 to be turned on in the period during which the electric double layer capacitor 3 does not supply the electric power to the load 4 via the load driving circuit 5. Thus, the discharge circuit 12 is electrically connected to the secondary battery 2 and the electric double layer capacitor 3 to discharge the electric double layer capacitor 3 to the secondary battery 2.

According to this control, the discharge circuit 12 discharges the electric double layer capacitor 3 in the period during which it is not necessary for the electric double layer capacitor 3 to supply the electric power to the load 4. Thus, the voltage Vc between terminals of the electric double layer capacitor 3 decreases to a value smaller than the drive voltage Vcd. Therefore, progress of deterioration of the electric double layer capacitor 3 can be suppressed compared with the case where the voltage Vc between terminals is also kept at the drive voltage Vcd in the period during which it is not necessary to supply the electric power to the load 4. In addition, the discharging operation is performed by the discharge circuit 12 with respect to the secondary battery 2 that can be charged and discharged. In other words, at least some of the electric power discharged from the electric double layer capacitor 3 by the discharging operation is supplied to the secondary battery 2 and is reused. Thus, wasteful consumption of energy can be reduced compared with the case where the electric power accumulated in the electric double layer capacitor 3 is consumed entirely by a resister or the like to decrease the voltage Vc between terminals.

Hereinafter, some specific examples of the charging device 1 according to this embodiment are described.

As a first example, the case where the relationship "Vb<Vcd" is established between the power supply voltage Vb of the secondary battery 2 and the drive voltage Vcd of the electric double layer capacitor 3 will be described. In this case, the charge circuit 11 is made up of a boost (step up) converter, for instance, and restricts current flowing in the electric double layer capacitor 3 while stepping up the power supply voltage Vb of the secondary battery 2 to be delivered to the electric double layer capacitor 3. In addition, the discharge circuit 12 is made up of a buck converter or a resistor, for instance, and steps down the voltage Vc between terminals of the electric double layer capacitor 3 to the power supply voltage Vb to deliver the resultant voltage to the secondary battery 2.

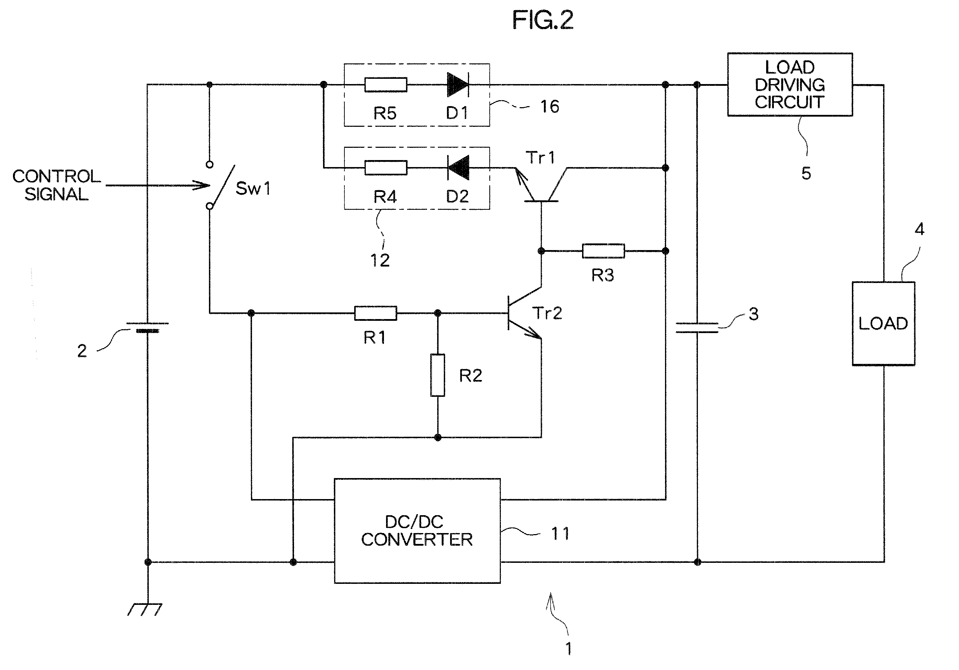

FIG. 2 is a circuit diagram illustrating a specific example of a circuit structure of the charging device 1 in the first example (in the case where Vb is lower than Vcd). In the example of FIG. 2, a switch element Sw1 corresponds to the switch 14 of FIG. 1, and a transistor Tr1 corresponds to the switch 15 of FIG. 1. In addition, the charge circuit 11 is a DC/DC converter (boost converter), and the discharge circuit 12 includes a resistor R4 and a diode D2. Here, the diode D2 is connected between the resistor R4 and the transistor Tr1 in order to protect the transistor Tr1 when Vb is higher than Vc. Hereinafter, an operation of the charging device 1 illustrated in FIG. 2 will be described.

If it is required to charge the electric double layer capacitor 3, a control signal for turning on the switch element Sw1 is supplied from the outside. When the switch element Sw1 is turned on by the control signal, the power supply voltage Vb of the secondary battery 2 is supplied to the charge circuit (DC/DC converter) 11. The charge circuit 11 steps up the supplied power supply voltage Vb and delivers the stepped-up voltage to the electric double layer capacitor 3. Thus, the charging operation is performed by the charge circuit 11 until the voltage Vc between terminals of the electric double layer capacitor 3 becomes the drive voltage Vcd. In addition, when the switch element Sw1 is turned on, the transistor Tr2 is turned on by base current flowing in the transistor Tr2 via the resistor R1 so that collector current flows in the transistor Tr2. Thus, the transistor Tr1 is turned off, and no current flows in the discharge circuit 12 side.

On the other hand, when the supply of the electric power from the electric double layer capacitor 3 to the load 4 becomes unnecessary, a control signal for opening the switch element Sw1 is supplied from the outside. Thus, when the switch element Sw1 is opened, the power supply voltage Vb of the secondary battery 2 is not supplied to the charge circuit 11. In addition, when the switch element Sw1 becomes turned off, the transistor Tr2 is also turned off. Consequently, the base current flows from the electric double layer capacitor 3 to the transistor Tr1 via the resistor R3 so that the transistor Tr1 becomes turned on. As a result, current flows from the electric double layer capacitor 3 to the resistor R4 via the transistor Tr1 and the diode D2, and the voltage stepped down by the resistor R4 is applied to the secondary battery 2. Thus, at least some of the electric power accumulated in the electric double layer capacitor 3 is resupplied to the secondary battery 2.

On this occasion, current flows in the discharge circuit 12 until the voltage Vc between terminals of the electric double layer capacitor 3 decreases to a predetermined target voltage Vt. In other words, the discharge circuit 12 discharges the electric double layer capacitor 3 until the voltage Vc between terminals decreases to the target voltage Vt. When the voltage Vc between terminals decreases to the target voltage Vt, the discharging operation is stopped. In the example illustrated in FIG. 2, this target voltage Vt becomes a value determined in accordance with the power supply voltage Vb of the secondary battery 2, a voltage drop by the discharge circuit 12 and the transistor Tr1, and the like.

Note that the charging device 1 of the example of FIG. 2 further includes a supplementary charge circuit 16 in addition to the charge circuit 11 and the discharge circuit 12. The supplementary charge circuit 16 is disposed between the secondary battery 2 and the electric double layer capacitor 3, and is connected in parallel to the charge circuit 11 and the discharge circuit 12. In addition, in the example of FIG. 2, the supplementary charge circuit 16 includes a resistor R5 and a diode D1. This supplementary charge circuit 16 supplies electric power from the secondary battery 2 to the electric double layer capacitor 3 to perform the operation of charging the electric double layer capacitor 3 similarly to the charge circuit 11. Specifically, if the voltage Vc between terminals of the electric double layer capacitor 3 is decreased to a value lower than the power supply voltage Vb of the secondary battery 2 due to self-discharge or the like, for instance, the supplementary charge circuit 16 supplies electric power from the secondary battery 2 to the electric double layer capacitor 3 via the resistor R5 and the diode D1, whereby the electric double layer capacitor 3 is charged until the voltage Vc between terminals of the electric double layer capacitor 3 reaches a voltage corresponding to the voltage Vb. Note that the supplementary charge circuit 16 performs this charging operation irrespective of the on or off state of the switch element Sw1. Thus, the voltage Vc between terminals of the electric double layer capacitor 3 is maintained to be a predetermined voltage corresponding to voltage Vb or higher.

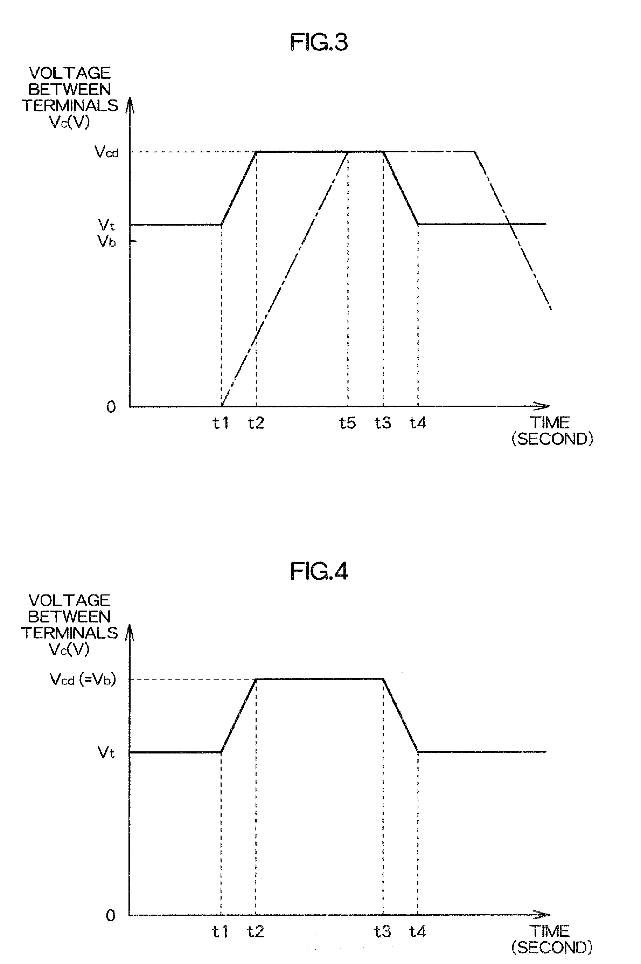

FIG. 3 is a graph showing an example of a time variation of the voltage Vc between terminals of the electric double layer capacitor 3 in the charging device 1 illustrated in FIG. 2. In this graph, the horizontal axis represents time (the unit is seconds) while the vertical axis represents a value of the voltage Vc between terminals (the unit is volts), and the solid line in the graph indicates the time variation of the voltage Vc between terminals in the charging device 1 illustrated in FIG. 2.

As described above, even in the case where it is not necessary to supply the power to the load 4, the voltage Vc between terminals of the electric double layer capacitor 3 is maintained to be the predetermined target voltage Vt. In this state, if it becomes necessary to supply electric power from the electric double layer capacitor 3 to the load 4 at the point of time t1, a control signal for starting to charge the electric double layer capacitor 3 is supplied to the charging device 1. Thus, the switch element Sw1 is turned on, and the charge circuit 11 starts the charging operation. With this charging operation, the voltage Vc between terminals increases to the drive voltage Vcd by the point of time t2. After that, the charge circuit 11 is connected so that the voltage Vc between terminals of the electric double layer capacitor 3 is maintained to be the drive voltage Vcd while the electric double layer capacitor 3 supplies the electric power to the load 4.

Further, the graph illustrated in FIG. 3 indicates that it has become unnecessary to supply the electric power to the load 4 at the point in time t3. In this state, a control signal indicating that it has become unnecessary to supply the electric power to the load 4 is supplied to the charging device 1. Thus, the switch element Sw1 is opened so that the charge circuit 11 stops the charging operation, and conversely the discharge circuit 12 starts the discharging operation. With this discharging operation, the voltage Vc between terminals decreases to the target voltage Vt by the point in time t4, and after that, the voltage Vc between terminals is maintained to be the target voltage Vt.

In addition, a chain line of the graph of FIG. 3 indicates the time variation of the voltage Vc between terminals in the case where it is assumed that the discharge circuit 12 performs the discharging operation until the voltage Vc between terminals decreases not to the predetermined target voltage Vt described above, but to zero, when it is not necessary to supply the electric power to the load 4. In this case, similarly to the graph of the solid line described above, if it is assumed that the supply of the electric power to the load 4 has become necessary at the point in time t1, the charging operation is performed until the voltage Vc between terminals increases from zero to the drive voltage Vcd by the point in time t5 as illustrated by the chain line of FIG. 3. Then, the supply of the electric power to the load 4 is started from the point of time t5. If the electric double layer capacitor 3 is discharged completely until the voltage Vc between terminals becomes zero when the supply of the electric power to the load 4 is unnecessary as described above, the waiting time from the start of charging the electric double layer capacitor 3 until it becomes possible to supply the electric power to the load 4 is (t5 - t1), which is longer than the waiting time (t2 - t1) in the case where the voltage Vc between terminals is maintained to be the predetermined target voltage Vt. As illustrated in FIG. 3, if the voltage Vc between terminals of the electric double layer capacitor 3 is maintained to be the predetermined target voltage Vt that satisfies the inequality "0<Vt<Vcd" even in the period during which the supply of the electric power to the load 4 is unnecessary, the waiting time from the start of the charging operation until starting to drive the load 4 can be decreased.

Further, since the resistor is used for the discharge circuit 12 in the circuit of FIG. 2, the target voltage Vt is a value corresponding to the power supply voltage Vb of the secondary battery 2. However, if a DC/DC converter or the like is used for the discharge circuit 12, a value of the target voltage Vt may be determined not by the power supply voltage Vb, but in accordance with a condition with respect to the waiting time until the start of driving the load 4, and a condition with respect to the lifetime of the electric double layer capacitor 3.

Next, as a second example of the charging device 1 according to this embodiment, the case where the relationship of "Vb≥Vcd" is established between the power supply voltage Vb of the secondary battery 2 and the drive voltage Vcd of the electric double layer capacitor 3 is described. In this case, the charge circuit 11 is made up of a buck converter or a resistor, for instance, and steps down the power supply voltage Vb of the secondary battery 2 to deliver the resultant voltage to the electric double layer capacitor 3, whereby the electric double layer capacitor 3 is charged until the voltage Vc between terminals becomes the drive voltage Vcd. In addition, the discharge circuit 12 is made up of a boost converter, for instance, and steps up the voltage Vc between terminals of the electric double layer capacitor 3 to the power supply voltage Vb to deliver the resultant voltage to the secondary battery 2.

FIG. 4 is a graph showing an example of the time variation of the voltage Vc between terminals of the electric double layer capacitor 3 in the second example (Vb≥Vcd). The graph of FIG. 4 particularly shows the case of Vb=Vcd. Similarly to FIG. 3, the horizontal axis represents time (the unit is seconds) while the vertical axis represents a value of the voltage Vc between terminals (the unit is volts). The solid line of the graph indicates a time variation of the voltage Vc between terminals of the electric double layer capacitor 3. In addition, also in the example of FIG. 4, the voltage Vc between terminals of the electric double layer capacitor 3 should be maintained to be the predetermined target voltage Vt in the period during which the supply of the electric power to the load 4 is unnecessary.

Also in the example of FIG. 4, the voltage Vc between terminals has substantially the same time variation as the example of FIG. 3. Specifically, the charge circuit 11 starts the charging operation at the point in time (time t1) when the supply of the electric power from the electric double layer capacitor 3 to the load 4 becomes necessary, and the voltage Vc between terminals increases to the drive voltage Vcd by the point in time t2. Then, from the point in time t2, the electric power is supplied from the electric double layer capacitor 3 to the load 4. In addition, the discharge circuit 12 starts the discharging operation at the point in time (time t3) when the supply of the electric power to the load 4 becomes unnecessary. The discharge circuit 12 steps up the voltage Vc between terminals of the electric double layer capacitor 3 to the power supply voltage Vb of the secondary battery 2 to deliver the resultant voltage to the secondary battery 2, thereby discharging the electric double layer capacitor 3. Thus, the voltage Vc between terminals decreases to the target voltage Vt by the point in time t4. After that, the voltage Vc between terminals is maintained to be the target voltage Vt.

Also in this example of FIG. 4, the voltage Vc between terminals of the electric double layer capacitor 3 is maintained to be the target voltage Vt in the period during which the supply of the electric power to the load 4 is unnecessary. Therefore, it is possible to decrease the waiting time from the start of the charging operation until the start of driving the load 4 compared with the case where the electric double layer capacitor 3 is discharged completely.

In the above-mentioned description, the charge circuit 11 for charging the electric double layer capacitor 3 and the discharge circuit 12 for discharging the same are individual circuits connected in parallel with each other. However, the embodiment of the present invention is not limited to this structure. For instance, the charging device 1 may have a single charge and discharge circuit 17 for charging and discharging the electric double layer capacitor 3, instead of the charge circuit 11 and the discharge circuit 12 illustrated in FIG. 1.

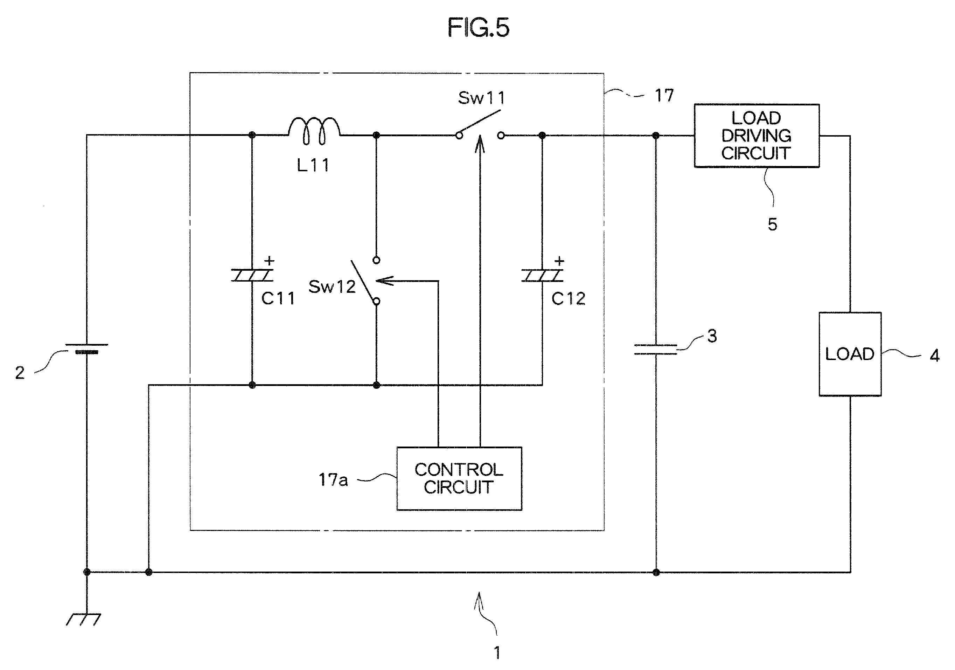

FIG. 5 is a circuit diagram illustrating an example of a circuit structure in the case where "Vb<Vcd" is established, as such a charging device 1. In the example of FIG. 5, the charging device 1 includes the charge and discharge circuit 17. The charge and discharge circuit 17 is disposed between the secondary battery 2 and the electric double layer capacitor 3, and is made up of, for example, a buck-boost converter that can step up and step down the voltage while restricting the flowing current value.

In FIG. 5, the charge and discharge circuit (buck-boost converter) 17 includes a coil L11, electrolytic capacitors C11 and C12, switch elements Sw11 and Sw12, and a control circuit 17a. When the control circuit 17a controls to switch the on and off states of the switch elements Sw11 and Sw12, the charge and discharge circuit 17 performs the step up or step down operation. Specifically, the charge and discharge circuit 17 switches between a first operation and a second operation to be performed in accordance with whether or not the electric double layer capacitor 3 should be charged. In the first operation, the charge and discharge circuit 17 steps up the power supply voltage Vb of the secondary battery 2 and delivers the resultant voltage to the electric double layer capacitor 3 (i.e., the electric double layer capacitor 3 is charged). In the second operation, the charge and discharge circuit 17 steps down the voltage Vc between terminals of the electric double layer capacitor 3 and delivers the resultant voltage to the secondary battery 2 (i.e., the electric double layer capacitor 3 is discharged).

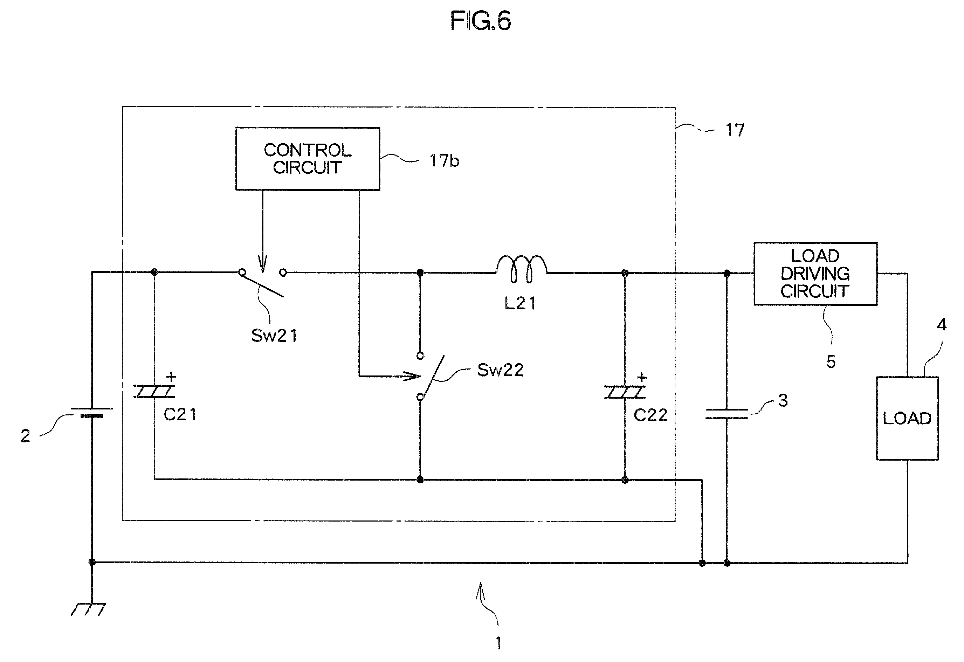

FIG. 6 is a circuit diagram illustrating an example of the circuit structure in the case where "Vb≥Vcd" is established, as another example of the charging device 1 equipped with such a charge and discharge circuit 17. Also in the example of FIG. 6, the charge and discharge circuit 17 is a buck-boost converter, and includes a coil L21, electrolytic capacitors C21 and C22, switch elements Sw21 and Sw22, and a control circuit 17b. When the control circuit 17b controls to switch the on and off states of the switch elements Sw21 and Sw22, the charge and discharge circuit 17 performs the step up or step down operation. However, the buck-boost converter of the example of FIG. 6 has a structure that is bilaterally symmetric to the example of FIG. 5, and is disposed between the secondary battery 2 and the electric double layer capacitor 3. Thus, opposite to the case of FIG. 5, the charge and discharge circuit 17 of FIG. 6 steps down the power supply voltage Vb of the secondary battery 2 and delivers the resultant voltage to the electric double layer capacitor 3 when the electric double layer capacitor 3 is charged. The charge and discharge circuit 17 of FIG. 6 steps up the voltage Vc between terminals of the electric double layer capacitor 3 and delivers the resultant voltage to the secondary battery 2 when the electric double layer capacitor 3 is discharged.

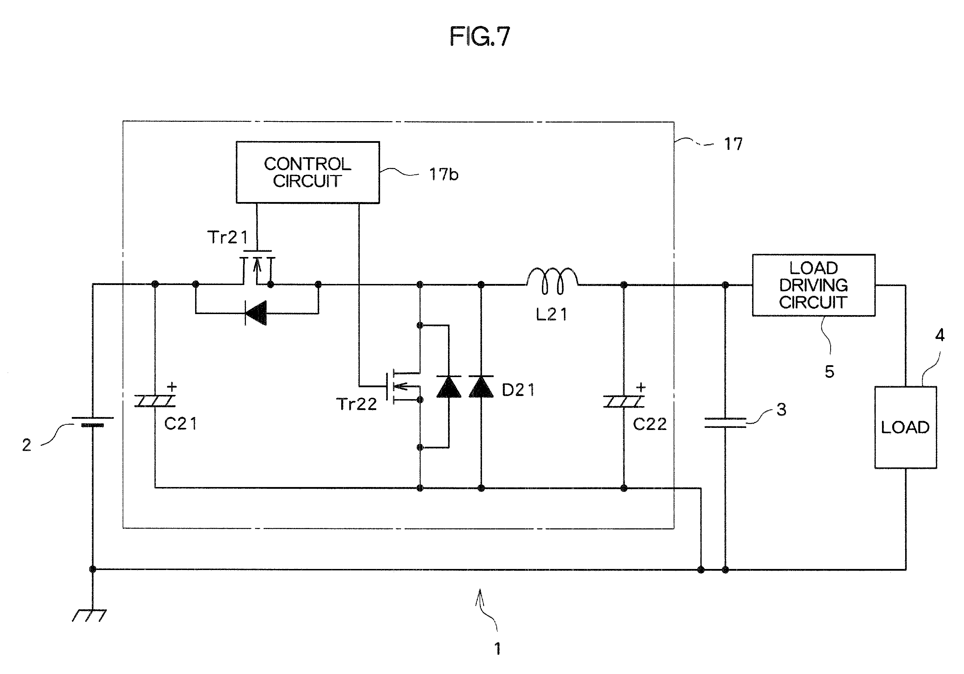

FIG. 7 illustrates a specific example in the case where field effect transistors Tr21 and Tr22 are used as the switch elements Sw21 and Sw22 in the charging device 1 illustrated in FIG. 6. Note that a diode D21 is further connected in parallel to the field effect transistor Tr22 so as to support the field effect transistor Tr22 in the example of FIG. 7.

Thus, by using the buck-boost converter, the circuit structure of the charging device 1 can be simplified compared with the case where the charge circuit 11 and the discharge circuit 12 are disposed as independent circuits, as illustrated in FIG. 2 or the like. In addition, energy loss caused along with the charging and the discharging operations can be reduced compared with the case where the resistor is used for stepping down the voltage.

According to the charging device 1 of this embodiment described above, at least some of the electric power accumulated in the electric double layer capacitor 3 is discharged to the secondary battery 2 in the period during which the supply of the electric power from the electric double layer capacitor 3 to the load 4 is not necessary. Thus, the voltage of the electric double layer capacitor 3 is decreased, and hence the lifetime of the electric double layer capacitor 3 can be increased. In addition, since at least some of the electric power accumulated in the electric double layer capacitor 3 is recovered by the secondary battery 2 through the discharge, the energy loss can be reduced compared with the case where the electric power is consumed completely by a resistor or the like so that the electric double layer capacitor 3 is discharged.

For instance, if the embodiment of the present invention is applied to a power supply device for an automobile such as a private commuter car, a company car for daytime business use, or the like, that is repeatedly used every day but is kept in a standby state with the engine drive being stopped for approximately half of the day, the voltage of the electric double layer capacitor can be decreased by approximately half a day, every day. Thus, the lifetime of the electric double layer capacitor can be greatly increased compared with the case where the electric double layer capacitor is maintained in a fully charged state.

Note that the embodiment of the present invention is not limited to the structure described above. For instance, the charging function, the discharging function, and the like, that are realized by the charge circuit 11, the discharge circuit 12, or the charge and discharge circuit 17 in the structure described above may be realized by other circuits having other structures different from the structures described above.

While there have been described what are at present considered to be certain embodiments of the invention, it will be understood that various modifications may be made thereto, and it is intended that the appended claims cover all such modifications as fall within the true spirit and scope of the invention.

## Claims

1. A charging device comprising:
a charge means for supplying electric power accumulated in a secondary battery to an electric double layer capacitor to charge the electric double layer capacitor; and
a discharge means for discharging at least some of the electric power accumulated in the electric double layer capacitor to the secondary battery in a period during which the electric double layer capacitor does not supply the electric power to a load.

2. A charging device according to claim 1, wherein the discharge means discharges the electric double layer capacitor until a voltage between terminals of the electric double layer capacitor decreases to a predetermined target voltage.

3. A charging device according to claim 1 or 2, wherein each of the charge means and the discharge means comprises one of a boost converter and a buck converter.

4. A charging device according to claim 1, 2, or 3, wherein both of the charge means and the discharge means are included in a single buck-boost converter.

5. A charging device comprising:
a charge circuit for supplying electric power accumulated in a secondary battery to an electric double layer capacitor to charge the electric double layer capacitor; and
a discharge circuit for discharging at least some of the electric power accumulated in the electric double layer capacitor to the secondary battery in a period during which the electric double layer capacitor does not supply the electric power to a load.

6. A charging device comprising a charge and discharge circuit for supplying electric power accumulated in a secondary battery to an electric double layer capacitor to charge the electric double layer capacitor and for discharging at least some of the electric power accumulated in the electric double layer capacitor to the secondary battery in a period during which the electric double layer capacitor does not supply the electric power to a load.
